# EUROPEAN PATENT APPLICATION

(11) **EP 1 985 341 A1**
(43) Date of publication of application: **29.10.2008**
(21) Application number: 07714264.4
(22) Date of filing: 15.02.2007
(51) Int. Cl.: A63F 13/00, A63F 13/12

(54) **GAME SERVER DEVICE, GAME SERVICE METHOD, INFORMATION RECORDING MEDIUM, AND PROGRAM**

(30) Priority: 17.02.2006 JP 2006040308
(71) Applicant: Konami Digital Entertainment Co., Ltd., Tokyo 107-8324 (JP)
(72) Inventor: MORI, Shoji, Tokyo 106-6114 (JP)
(74) Representative: Rüger, Barthelt & Abel Patentanwälte
(86) International application number: PCT/JP2007/052734
(87) International publication number: WO 2007/094409

(57) **Abstract**

When providing a game that changes scene data according to the selection inputs of a plurality of players, in order to provide scene data without delay even in a case where there is a delay in selection input or where there is no selection input by some of the players, a designating unit (401) of a game server device (13) designates an order in which scene data are to be provided to the plurality of players, a providing unit (402) provides scene data in the designated order to each of the plurality of players, and a receiving unit (403) receives a selection input from each of the plurality of players. The designating unit (401), in a case where second scene data following first scene data are to be designated based on selection inputs, sets an input period, causes the receiving unit (403) to receive selection inputs from the plurality of players, and designates the second scene data based on the selection inputs received within the input period.

## Description

### Technical Field

The present invention relates to a game server device and a game service method that provide scene data without delay when providing a game in which scene data change according to selection inputs by a plurality of players, even if there is a delay in or no selection input by some of the players, a computer readable information recording medium storing a program for realizing these on a computer, and the program.

### Background Art

Conventionally, there have been provided adventure games based on branch-type scenarios wherein the scene data displayed on the screen change according to player selection, thereby changing the story and narrative provided to the player. On the other hand, there have also been proposed games wherein the course of the game changes based on a plurality of players.
Such a game related technique has been disclosed, for example, in the following literature.
Patent Literature 1: Unexamined Japanese Patent Application KOKAI Publication No. 2003-175283.

Here, in the Patent Literature 1, there has been disclosed a technique related to a game wherein a plurality of players participates and, in a case where the game is over for a certain player, the player is allowed to enter into a spectator mode, in which he or she can cheer for and jeer at other players for which the game is not over, thereby changing the win/loss result according to the degree of cheering and jeering.
On the other hand, in the real world, when a certain decision is to be made, a method wherein the decision is made based on a participant majority vote is widely used.

### DISCLOSURE OF THE INVENTION

### Problem to be Solved by the Invention

When such decision-making by a plurality of players based on a majority vote, etc., is introduced into the content of a game such as an adventure game or MMORPG (Massively Multiplayer Online Roll Playing Game), etc., it is necessary to design the game so that in the event some of the players cannot participate in the decision-making due to an incident such as network communication delay or disconnection, the course of the game of the other players is not impeded.
Further, it is also necessary to ensure that a player who recovers from such an incident does not feel alienated when the content of the game that had advanced ahead is provided to the player.

The present invention has been made to overcome such problems, and it is an object of the present invention to provide a game server device and a game service method that provide scene data without delay when providing a game in which scene data change according to selection inputs by a plurality of players, even if there is a delay in or no selection input by some of the players, a computer readable information recording medium storing a program for realizing these on a computer, and the program.
Means for Solving the Problem

To achieve the above objective, the following invention will be disclosed according to the principle of the present invention.

A game server device according to a first aspect of the present invention comprises a designating unit, a providing unit, and a receiving unit, and is constituted as follows.
First, the designating unit designates the order in which scene data are to be provided to a plurality of players.
The data that can be used as scene data include game scene descriptions, images, video, sound, and the lines of characters (particularly non-player characters) who appear in the various stories and game, etc. As illustrated in the above description, a game such as an adventure game or MMORPG is often configured so as to have a certain story flow, with the flow of the story to be provided branching off into different directions based on selection inputs by players. The order in which scene data are provided corresponds to the flow of that story.

Meanwhile, the providing unit provides scene data in the designated order to each of the plurality of players.
That is, the order of the scene data to be provided to each player by the providing unit is the same for all players. With this arrangement, the players participating in the game participate in the same story flow.
Note, however, that there may be a slight time difference in the time that the scene data actually reach each player for reasons such as a network communication delay in the computer communication network or a player pausing the game (temporarily stopping), for example.

In such a game wherein scene data for viewing the same game context from the perspective of each player are provided in an order, a certain relationship of correspondence is set in the scene data provided to each player. Thus, even if the details of the scene data provided to each player differ, as long as the scene data are data that provide the same game context, the data may be considered identical and the order may be common to all players.

Further, the receiving unit receives a selection input from each of the plurality of players, based on instructions from the designating unit.
In a game such as an adventure game or MMORPG, the receiving unit requests players to enter a selection input when something is to be selected (for example, the destination of a journey, approval/non-approval of participation of a character of another party, whether to fight or not, etc.), and in a game provided by the game server device, the receiving unit receives the selection input from each player and, taking into consideration the received inputs, designates the flow of the story.

Here, in a case where second scene data following first scene data are to be designated in the order based on selection inputs from the plurality of players, the designating unit sets an input period that precedes the designation, causes the receiving unit to receive selection inputs from the plurality of players, and designates the second scene data based on the selection inputs received within the input period.

Here, the first scene data correspond to the scene immediately before the story branches, and the second scene data correspond to one of the scenes immediately after the story branches. While the branch destination scene is designated by the designating unit according to a majority vote of selection inputs from the plurality of players combined with random numbers and various parameters, the present invention establishes an input period during which a selection input should be made, and takes into consideration only those wishes of the plurality of players that are based on selection inputs made during this input period.

Particularly, in a case where second scene data following first scene data are to be designated in the order based on selection inputs from the plurality of players in part or in whole, the providing unit is configured to: (a) provide to each player who entered a selection input during the input period the designated second scene data based on the selection inputs received during the input period following the first scene data; and (b) provide to each player who did not enter a selection input during the input period the designated second scene data based on the selection inputs received during the input period following the first scene data, after the selection input from the player who did not enter a selection input during the input period is received after the input period lapses.

With this arrangement, even in a case where some of the players participating in the flow of the same story are involved in an incident such as a network communication delay or communication disconnection or pausing and stepping away from the game, the remaining players can proceed with the story without waiting for the others, until recovery.
On the other hand, the scene data are provided to each player involved in an incident based on the designated order after the recovery, thereby making it possible for the player to receive the same story as the remaining players who had advanced ahead.

According to the present invention, when there is provided a game in which scene data change according to selection inputs of a plurality of players and there is a delay in or no selection input from some of the players, it is possible to provide the scene data without delay to the other players and provide the scene data to the players who were delayed in the same order as the other players, thereby enabling the players to play the game as a single "party".

Further, in the game server device of the present invention, the receiving unit can be configured to cancel the reception of selection inputs from a player whose input period has lapsed before the providing unit provides the first scene data.
A case where the input period lapses before the providing unit provides the first scene data typically involves circumstances such as described below.

That is:
(a) Player P pauses the game or an incident occurs on the computer communication network of player P.
(b) Next, input period X is set for the first scene data A and Player P is not able to enter a selection input in the input period X. The second scene data B are designated.
(c) Next, input period Y is set for the first scene data C and Player P is not able to enter a selection input in the input period Y. The second scene data D are provided.
(d) Next, player P returns to the game. The first scene data A, the second scene data B, . . . the first scene data C, and the second scene data D are provided in order to player P.

Under such circumstances, the input period Y elapses before the first scene data C are provided to player P.
The present invention is designed so that the selection input corresponding to the input period Y is not requested from player P during the period between the time when the first scene data C are provided and the time when the second scene data D are provided.

According to the present invention, it is possible to swiftly provide the game story to a player whose selection input is continually delayed in the input period due to network communication disconnection or absence as a result of game pausing, etc., without requesting the selection inputs corresponding to the second and subsequent delays. This makes it possible for the late players to naturally return to the game without being substantially aware of their lateness.

Further, in the game server device of the present invention, the providing unit may be configured so that when the providing unit provides the first scene data to each of the plurality of players and the input period lapses without any selection input from one of the players within that input period, the providing unit provides scene data following the presently provided scene data to that player after a selection input is entered by that player using the scene data designated based on the selection inputs received during that input period.

In the example of the circumstances above, when the late player P returns to the game, player P is requested to enter a selection input corresponding to the input period X after the first scene data A are provided.
After player P enters a selection input in response, the second scene data that have already been determined are provided to player P, regardless of the selection input entered by player P.
According to the present invention, the provision of scene data to a late player is paused the moment his or her lateness is first detected. After the player returns to the game, the scene data are provided in the order designated by the selection inputs of the other players, thereby making it possible for the late player to naturally return to the game without being substantially aware of his or her own lateness.

Further, in the game server device of the present invention, the designating unit can be configured so that in a case where the number of selection inputs received within the input period is less than a predetermined quorum, the end time of the input period is extended to a time that reflects the elapse of a predetermined time period from the current time, enabling the receiving unit to further receive selection inputs within the extended input period.
The present invention sets the minimum number of valid votes in a case where, for example, player selection input is based on a majority vote, and extends the input period in a case where the number of players who have entered selection inputs in the input period is less than a quorum, thereby making it possible to smoothly provide scene data without delay to the extent possible while respecting the wishes of the players to the extent possible.

Further, in the game server device of the present invention, the providing unit can be configured so that the second and subsequent scene data are provided to players who did not enter a selection input within the input period at a speed faster than the speed at which the second and subsequent scene data are provided to players who did enter a selection input within the input period.

Particularly, the providing unit can be configured to provide the scene data to the plurality of players by transmitting the scene data to the terminal devices respectively operated by the plurality of players, with the scene data containing a command that specifies the speed at which the transmitted scene data are to be played on the terminal device, or the speed at which a message included in the transmitted scene data is to be presented to the player; and to specify, in the command included in the scene data to be provided in the second and subsequent scene data to the players who did not enter a selection input within the input period, a speed that is faster than the speed specified in the command included in the scene data provided in the second and subsequent scene data to the players who entered a selection input within the input period.
As in the example described above, the players whose selection input was delayed subsequently catch up to the same story as the other players. Here, the speed at which scene data are to be provided to late players is faster than the speed at which scene data are to be provided to players who advance ahead. Various means can be employed as means for changing speed, such as shortening the wait time for the automatic play of message displays of scene data, omitting some of the animation displays to be played in scene data, or accelerating the text scroll speed.

According to the present invention, scene data are provided so that a late player can catch up with players who have advanced ahead to the extent possible, thereby increasing the sense of unity among the players who form a single "party" and increasing the possibility of the late player's participation in the next selection input to the extent possible.

A game service method according to another aspect of the present invention is executed by a game server device including a designating unit, a providing unit, and a receiving unit, comprises a designating step, a providing step, and a receiving step, and is constituted as follows.
That is, in the designating step, the designating unit designates an order in which scene data are to be provided to a plurality of players.
Meanwhile, in the providing step, the providing unit provides scene data in the designated order to each of the plurality of players.

In the receiving step, the receiving unit receives a selection input from each of the plurality of players, based on instructions from the designating unit.
Here, in the designating step, in a case where second scene data following first scene data are to be designated in the order based on selection inputs from the plurality of players, an input period that precedes the designation is set, the receiving unit is caused to receive selection inputs from the plurality of players, and the second scene data are designated based on the selection inputs received within the input period.

A program according to another aspect of the present invention is configured to control a computer to function as the above-described game server device, and to execute the above-described game service method on a computer.
The program of the present invention can be recorded on a computer readable information recording medium, such as a compact disk, a flexible disk, a hard disk, a magneto-optical disk, a digital video disk, a magnetic tape, or a semiconductor memory.
The program can be distributed and sold, independently of a computer which executes the program, over a computer communication network. The information recording medium can be distributed and sold independently of the computer.

### Effect of the Invention

According to the present invention, it is possible to provide a game server device and a game service method that provide scene data without delay when providing a game in which scene data change according to selection inputs by a plurality of players, even if there is a delay in or no selection input by some of the players, a computer readable information recording medium storing a program for realizing these on a computer, and the program.

### Brief Description of Drawings

FIG. 1 is a schematic diagram illustrating the schematic configuration of a game system according to the embodiment.
FIG. 2 is a schematic diagram illustrating the schematic configuration of a typical information processing device that carries out the function of a game server device of the embodiment by executing a program.
FIG. 3 is an explanatory diagram illustrating the configuration of an extremely simple script.
FIG. 4 is a schematic diagram illustrating the schematic configuration of a game server device according to the embodiment.
FIG. 5 is a flowchart illustrating the flow of control of designation processing executed by the designating unit.
FIG. 6 is a flowchart illustrating the flow of control of provision processing executed by the providing unit.
FIG. 7 is a flowchart illustrating the flow of control of first reception processing executed by the receiving unit.
FIG. 8 is a flowchart illustrating the flow of control of second reception processing executed by the receiving unit.

### Description of Reference Numerals

11 game system
13 game server device
15 Internet
19 terminal device
101 information processing device
102 CPU
103 hard disk
104 RAM
105 NIC
106 ROM
107 input device
108 display device
141 script
150 start point
151 regular scene
152 option scene
153 regular scene
154 option scene
155 regular scene
156 option scene
157 regular scene
158 regular scene
159 regular scene
160 regular scene
161 end point
401 designating unit
402 providing unit
403 receiving unit

### Best Mode for Carrying Out the Invention

An embodiment of the present invention will be described below. The embodiment to be described below is given by way of illustration only, and not to limit the scope of the invention. Therefore, persons skilled in the art can employ embodiments in which the individual elements or all the elements are replaced with equivalent ones, and which are also encompassed in the scope of the invention.

### Embodiment 1

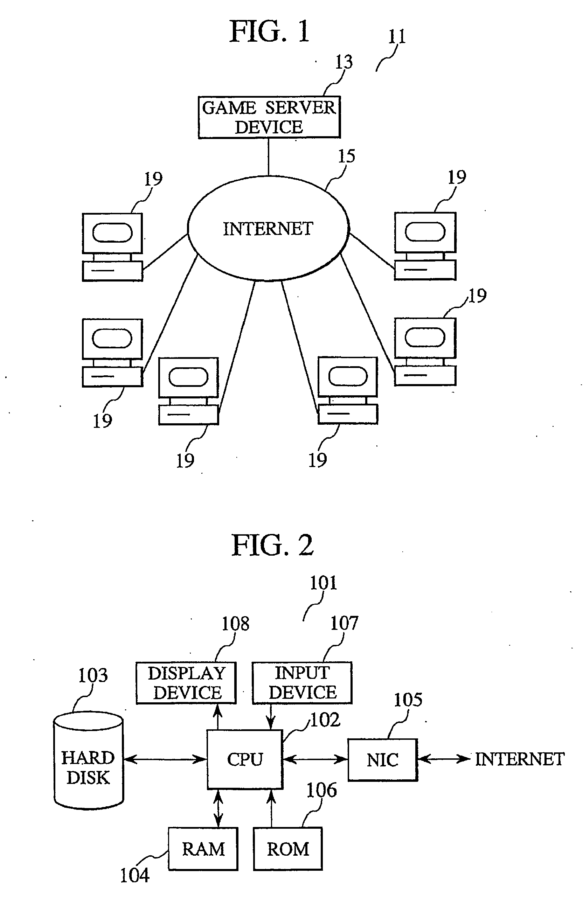

FIG. 1 is a schematic diagram illustrating the schematic configuration of a game system according to this embodiment. A description is given below with reference to this drawing.

As shown in the figure, a game server device 13 of a game system 11 is communicably connected to a plurality of terminal devices 19 via an Internet 15. The game server device 13 of this embodiment is a typical device that gathers together a plurality of players who use the game device 19 into group (also referred to as "parties" in game terminology), providing the identical game story to each of the players affiliated with the identical group.

The following provides an explanation presuming that the game played is a text type adventure game in which the story proceeds based on options selected by the players. In a normal text type adventure game, the story branches when a player selects an option, thereby allowing the player to experience the development of various stories by selecting different options. In the text type adventure game of the present embodiment, however, the story branches based on a combination of options selected by a plurality of players (typically based on a majority vote).

In games such as MMORPG, the options for selecting a player's next destination from the player's current location, or the offense and defense command inputs for a battle scene when a party encounters enemy characters can be similarly considered options of the above-described text type adventure game. Thus, it is possible to apply the principles of the present invention to a case where the order of the content to be provided can be designated by interaction from the players affiliated with the party, and where the same content is to be provided in the same order to the players affiliated with the party.

At this time, the content to be provided may be completely uniform among all players, or the viewpoint from which the content is provided may differ as the virtual world in which the content is developed is viewed from the viewpoint of the character operated by the player.

For example, in a case of an identical game story but different player viewpoints, the details of the scene data actually provided to the players may differ. For example, in a game where player A operates character X and player B operates character Y, in a case where the lines of character X are displayed, a situation where "I just said, '. . . '" is displayed on the terminal of player A, and "X said, '. . . '" is displayed on the terminal of player B is possible.

Even in such a case, the framework of the provided story to be provided is uniform among all players. Thus, the principles of the present invention may be applied as long as the framework of the story is uniform, even if there are small differences in the details of the content actually provided.

For ease of understanding, the following provides an explanation using as an example a scenario where both the order and content of the story to be provided to each player are the same.

A program recorded in a predetermined information recording medium such as a DVD-ROM (Digital Versatile Disk Read Only Memory) may be executed on a consumer game device so as to function as the terminal device 19. The image information, sound information, animation information, and textual information that express the content may be provided on the terminal device 19 from the game server 13 via the Internet 15.

The image information, sound information, animation information, and textual information may be recorded on the DVD-ROM in advance in part or in whole so that command information indicating which content is to be read from the DVD-ROM and provided to the player (information specifying the file name, etc., that contains this information, for example) may be provided from the game server device 13 to the terminal device 19, and the terminal device 19 may read the content from the DVD-ROM in accordance with the command information and present the read content to the player.

FIG. 2 is a schematic diagram illustrating the schematic configuration of a typical information processing device in which a game server device according to this embodiment is realized by activating the program. A description is given below with reference to this drawing.

An information processing device 101 operates under the control of a CPU 102. The CPU 102 reads a game service program recorded on a hard disk 103 to a RAM 104 used as a temporary storage area and executes the read program, thereby functioning as the game server device 13.

The information processing device 101 includes a network interface card (Network Interface Card; NIC) 105 connected to the Internet 15, and is capable of communicating with a plurality of the terminal devices 19 via the NIC 105.

Additionally, the information processing device 101 comprises a ROM 106 wherein an IPL (Initial Program Loader), a program executed at power ON, is stored. While the information processing device 101 may also include an input device 107, such as a keyboard or mouse, and a display device 108, such as a CRT (Cathode Ray Tube) or liquid crystal display, another information processing device connected via the NIC 105 may be utilized as a terminal for input/output with the user that manages these game server devices.

The hard disk 103 stores information such as the image information, sound information, animation information, and textual information of the content to be provided to the players, and information called "script" which indicates the order in which this information is to be provided, the timing at which options will be presented, and the way in which the content is to branch according to the selection inputs made by the players in response. In script, information such as the image information, sound information, animation information, and textual information that is to be provided concurrently or sequentially en bloc is managed in units called "scenes."

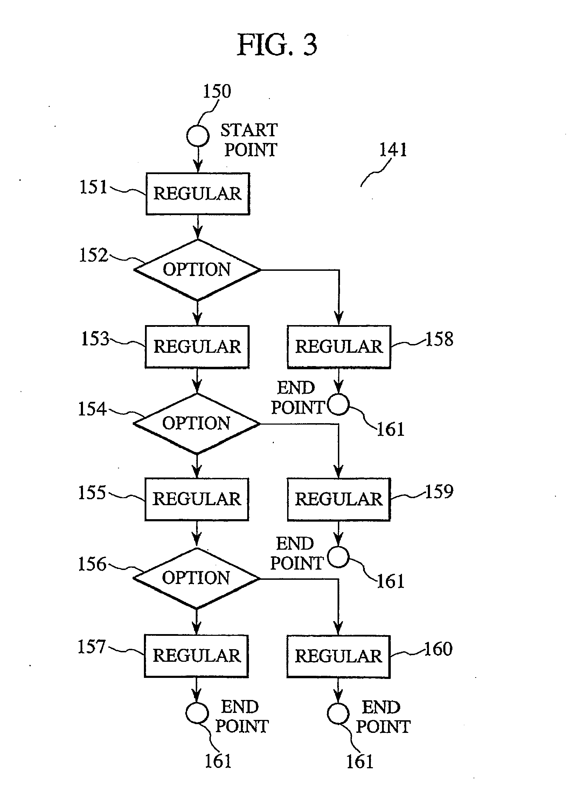

FIG. 3 is an explanatory diagram illustrating the configuration of an extremely simple script. A description is given below with reference to this drawing.
A script 141 shown in the drawing comprises one start point 150, ten scenes 151 to 160, and four end points 161. The scenes 151 to 160 can be divided into scenes 152, 154, and 156 which request option selection, and scenes 151, 153, 155, 157, 158, 159, and 160 which are simply played without requesting option selection (including forms wherein play is paused until the player suitably presses a key or button).

In this figure, the scenes 152, 154, and 156 which request option selection are framed within a diamond shape in accordance with a general flowchart, and the regular scenes 151, 153, 155, 157, 158, 159, and 160 are framed within a rectangular shape in accordance with a general flowchart.

The game server device 13 suitably reads and provides to the terminal device 19 via the NIC 105 the data structure of the script 141 recorded on the hard disk 103 so as to present various contents to the player (the regular scene 151, 153, 155, 157, 158, 159, and 160) and, in a case where option input from the player is required (the option scenes 152, 154, and 156), receives the option selected on the terminal device 19 via the NIC 105 so as to designate the next scene to which the story is to proceed.

In the structure of the script 141 shown in the figure, the order of the scene data provided to each player is set to one of the following:
(a) Start point 150 → Regular scene 151 → Option scene 152 → Regular scene 153 → Option scene 154 → Regular scene 155 → Option scene 156 → Regular scene 157 → End point 161;
(b) Start point 150 → Regular scene 151 → Option scene 152 → Regular scene 153 → Option scene 154 → Regular scene 155 → Option scene 156 → Regular scene 160 → End point 161;
(c) Start point 150 → Regular scene 151 → Option scene 152 → Regular scene 153 → Option scene 154 → Regular scene 159 → End point 161; or
(d) Start point 150 → Regular scene 151 → Option scene 152 → Regular scene 158 → End point 161.

The flow of control of the above scene data is generally a flow in which (a) corresponds to the good end or true end, and (b), (c), and (d) correspond to a bad end or game over.

The data structure associated with the regular scenes 151, 153, 155, 157, 158, 159, and 160 includes multimedia information and command information such as image information, sound information, animation information, and textual information to be presented on the terminal device 19 when the scene is to be provided as scene data, and command information indicating information such as the wait time at the time of presentation.

The data structure associated with the option scenes 152, 154, and 156 includes option candidates that prompt player selection, and information associated with how the next branch destination is to be designated from the selection inputs of players.

In the example shown in this figure, because each of the option scenes 152, 154, and 156 has two branch destinations, the number of options is also typically two and, in this case, each option and branch destination have a one-to-one correspondence. Then, the option selected by the players is designated by a majority vote. In a case where there is a tie, various methods for designating the option are conceivable, such as designating the option by a random number, or selecting the first option or selecting the last option based on the order in which the selection inputs were received.

Various methods for associating the number of options and branch destinations are also conceivable. For example, in a case where the option scene corresponds to a battle scene of MMORPG, the battle proceeds according to the offense, defense, wait, or run away selections, etc. entered by the player moment by moment. Then, the scene proceeds to one scene when the battle is won, and to another scene when the battle is lost.

The script 141, in this manner, expresses information similar to a flowchart, enabling expression according to the various data structure (a structure similar to the program source, HTML/XML based expression, various tree structures, etc.). Thus, a case where the data structure expressing the order in which content is to be provided can be replaced with the above-described structure by following predetermined rules is also included within the scope of the present invention.

The script 141 is managed by the game server device 13, and which path was followed within the flowchart-like structure corresponding to the script 141 to provide scenes as scene data may be maintained and managed in order to provide the scene data to each player in the same order.

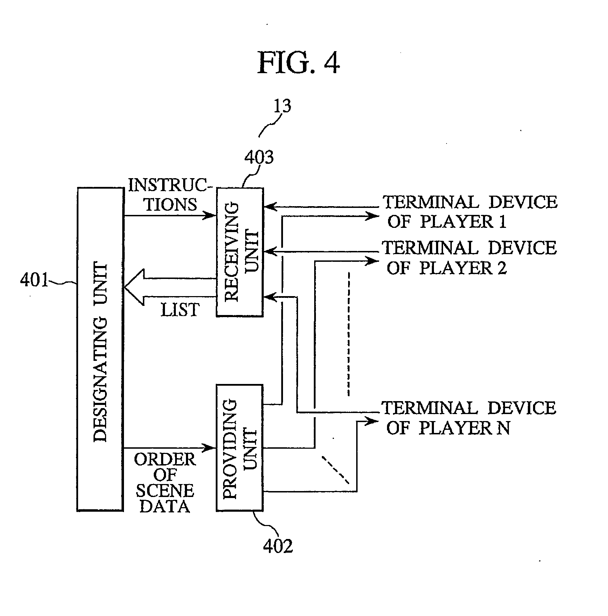

FIG. 4 is a schematic diagram illustrating the schematic configuration of a game server device according to this embodiment. A description is given below with reference to this drawing.

The game server device 13 of this embodiment includes a designating unit 401, a providing unit 402, and a receiving unit 403. The designation processing, provision processing, and reception processing executed in these respective units are performed in parallel in a co-routine format. The processing will be described in order below.

### (Processing of designating unit)

First, the designating unit 401 designates the order in which scene data are to be provided to a plurality of players.

As described above, scene data are managed in units of scenes, and the order in which scene data are provided is determined in a flowchart format. Thus, in a case where a branch destination is designated based on selection inputs from players, the selection inputs of players which the receiving unit 403 has received are used as reference as described later.

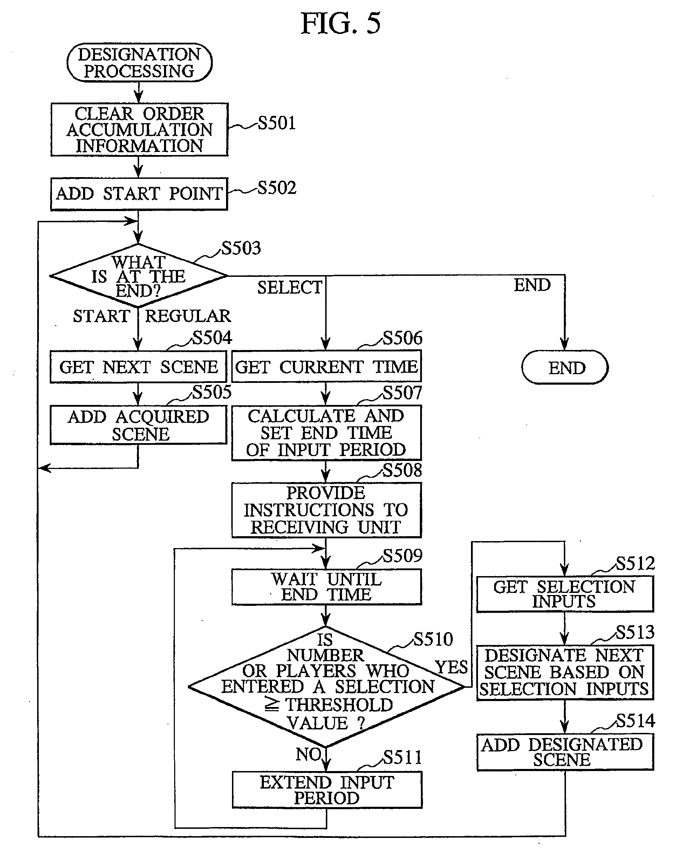

FIG. 5 is a flowchart illustrating the flow of control of the designation processing executed by the designating unit 401. A description is given below with reference to this drawing.

Here, the order in which scene data designated by the designating unit 401 are to be provided is accumulated in a format in such a manner that the data are added from start to finish to a queue in an order accumulation area prepared on the hard disk 103 or in the RAM 104 each time the next scene data to be provided are designated. Even if there is a time difference in the play status of each player, the scene data can be provided in the same order to each player by referring to the order in which the data were accumulated in the order accumulation area.

When the designation processing begins, the designating unit 401 clears the order accumulation area maintained on the hard disk 103 or the RAM 104 (Step S501), and adds information that refers to the start point 150 to the end of the order accumulation area (Step S502).

Next, the type of information at the end of the order accumulation area is determined (Step S503). In the above example, there are four possible types: start point (Step S503; Start), regular scene (Step S503; Regular), option scene (Step S503; Select), and end point (Step S503; End). The number of types may be suitably increased, however, depending on the type of game.

Then, in a case where the type of information at the end of the order accumulation area is start point (Step S503; Start) or in a case where the type of information at the end of the order accumulation area is regular scene (Step S503: Regular), the next scene to be provided is acquired in accordance with the script 141 (Step S504), that scene is added to the order accumulation area as the next scene data to be provided (Step S505), and the flow returns to Step S503.

On the other hand, in a case where the type of information at the end of the order accumulation area is end point (Step S503; End), the processing ends. With this arrangement, the flow of the provision of all content within a course of a game, from game start to true end, good end, bad end, or game over, is completely designated, and the order thereof is stored in the order accumulation area.

On the other hand, in a case where the type of information at the end of the order accumulation area is option scene (Step S503; Select), the designating unit 401 acquires the current time (Step S506) and sets the time after a predetermined time period has elapsed from the acquired current time as the end time of the input period (Step S507).

Then, the designating unit 401 issues instructions (Step S508) so that the receiving unit 403 receives selection inputs from players until the set end time of the input period (Step S508), and then waits until that end time (Step S509). The detailed processing of the receiving unit 403 will be described later.

Once the end time of the input period arrives, the designating unit 401 counts the number of players from whom the receiving unit 403 received selection inputs within the input period, and checks whether or not the number is greater than or equal to a predetermined threshold value (Step S510). In a case where the number is less than the predetermined threshold value (Step S510; No), the end time of the input period is reset so that it is extended to a time that reflects the elapse of a predetermined time from the current time (Step S511), and the flow returns to Step S509.

On the other hand, in a case where the number is greater than or equal to the predetermined threshold value (Step S510; Yes), the required quorum for designating the order of the scene data is constituted.

Then, the designating unit 401 acquires the player selection inputs received within the input period from the receiving unit 403 (Step S512) so as to designate the scene of the next scene data to which the story is to be branched (Step S513). Here, the designation is performed by referring to the script 141 and the information specified in the option scene according to the information at the end of the order accumulation area.

For example, as described above, in a case where there is a one-to-one correspondence between options and branch destinations in option scene information, an option is designated according to a majority vote based on the selection inputs of the players, and the scene associated with the designated option is designated as the next scene data to be provided.

In a case where a majority vote is used, when a plurality of options end up in a tie, various methods can be used to determine from among the tie options: such as designating the option selected first, designating the option selected last, or designating an option based on a random number.

Further, in a case where there is a character operated by each player and various parameters such as experience, physical strength, offensive power, defensive power, and possessed items are assigned to the characters, as in a game such as MMORPG, the designating unit 401 can also refer to these parameters and designate the next scene to be provided in accordance with a predetermined algorithm.

For example, as described above, in a case where a battle scene is used as an option scene, the game can proceed when there is victory in the battle scene, but ends when there is defeat, proceeding to a regular scene that displays game over immediately before the end point 161, etc.

Additionally, all players need not be asked to enter a selection for a certain option. Even in a case where some of the players are or just one player is asked to enter a selection, the story can proceed according to selection input. Even in such a case, it is possible that a player might not enter a selection input within the predetermined time period. When this occurs, the same processing can be performed as in a case where some of the players requested to enter a selection input within the input period do not enter a selection.

Note, however, that when the selection input of some of the players is requested, the possibility exists that none of the players to whom the request was made will respond. In such a case, various methods can be utilized to designate an option, such as designating the option based on a random number after the input period ends and then continuing processing based on that designated option.

Then, the information of the scene designated in Step S512 is added to the order accumulation area as the next scene data to be provided (Step S514), and the flow returns to Step S503.

In this manner, in a case where scene data following certain scene data are to be designated based on selection input from each player, the designating unit 401 can set an input period that precedes the designation, cause the receiving unit 403 to receive selection inputs from the plurality of players, and designate the next scene data based on the selection inputs received within the input period.

Thus, the CPU 102 functions as the designating unit 401 in cooperation with the hard disk 103 or the RAM 104, etc.

### (Processing of providing unit)

The providing unit 402 provides scene data in the designated order to each of the plurality of players. The order of the scene data to be provided to each player by the providing unit 402 is the same for each player, and that order is stored in the order accumulation area maintained on the hard disk 103 or in the RAM 104, etc.

With this arrangement, in this embodiment, the players participating in the game participate in the same story flow. Note, however, that there may be a slight time difference in the time that the scene data actually reach each player for reasons such as a network communication delay in the computer communication network or a player pausing (temporarily stopping) the game, for example.

In response, for each player the providing unit 402 manages on the hard disk 103 or the RAM 104, etc., the number of the scene data (scene) accumulated in the order accumulation area to which each player has progressed. The progress chart in which this information is accumulated is maintained on the hard disk 103 or the RAM 104, etc.

Below, for ease of understanding, i-th scene data (scene) of the order accumulation area is referred to as s[i], and a[j] of j-th information of the progress chart indicates that j-th player has been provided with data up to scene data (scene) a[j] of the order accumulation information.

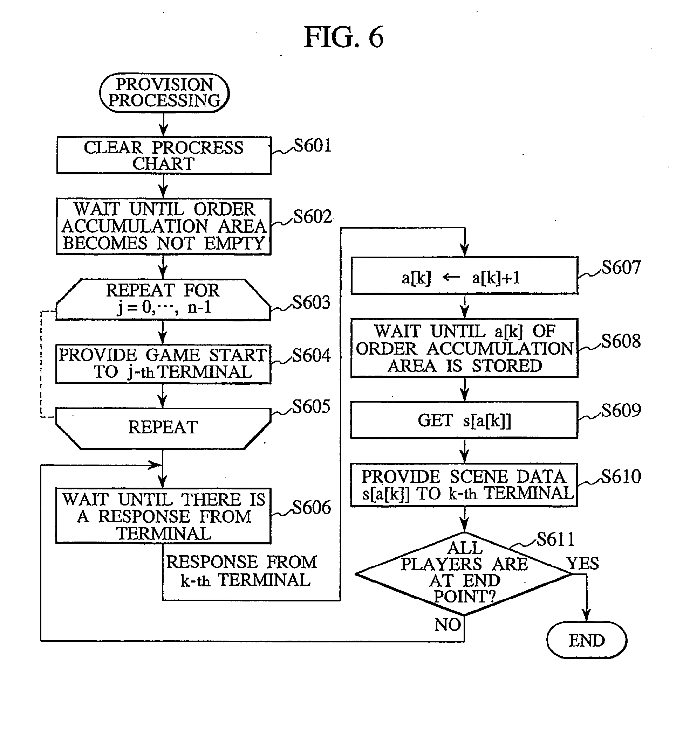

FIG. 6 is a flowchart illustrating the flow of control of the provision processing executed by the providing unit 402. A description is given below with reference to this drawing.

When the game starts, the providing unit 402 clears the information of the progress chart (Step S601). For example, in a case where the number of players is n, the providing unit 402 clears each element a[j] of the progress chart in a manner such that a[0] ← 0, a[1] ← 0,..., a[n-1] ← 0.

Next, the providing unit 402 waits until some information is stored at the head (0th element) of the order accumulation information. As described above, in Step S502, information that refers to the start point 150 is stored at the head of the order accumulation information. In Step S602, the providing unit 402 waits until the processing of Step S502 ends.

The processing up to Step S605 is repeated for j = 0, ... , n-1, respectively (Step S603). That is, in response to a[j] referring to the start point 150, the providing unit 402 provides information that notifies the terminal device 19 used by j-th player that the game has started as scene data s[a[j]], via the NIC 105 and the Internet 15 (Step S604).

Once the repetition processing (Step S605) ends, the providing unit 402 waits until a response is received via the Internet 15 and the NIC 105 from any one terminal device 19 in response to the provided scene data.

Each of the terminal devices 19 receives the provided scene data via the Internet 15, provides information such as image information, animation information, sound information, and textual information specified therein to the player using an output function of the terminal device 19 and, once the providing process ends, returns a response to the game server device 13 to notify the game service device 13 that the processing has ended.

This response includes the following information:
(a) Which number player is using the terminal device 19;
(b) The number in order of scene data to which the response corresponds; and
(c) The option selected by the player in a case where scene data indicate an option scene.

In a case where a response is detected from k-th terminal device 19 in Step S606, the value of a[k] is incremented by one (Step S607), and then the providing unit 402 waits until some information is stored as element a[k] of the order accumulation information (Step S608). As described above, the scene corresponding to the scene data is added to the end of the order accumulation information in Step S505 and Step S514. In a case where the end of the order accumulation information is less than a[k] (as described above, the order accumulation information counts the number of the element based on a zero origin; thus, this condition is the same as an order accumulation information length shorter than a[k] + 1), the providing unit 402 waits until the end reaches a[k]th or latter (until the order accumulation information length is greater than or equal to a[k] + 1) in Step S608.

Next, the scene data s[a[k]] are acquired from the order accumulation information (Step S609), and provided to the k-th terminal device 19 (Step S610).

Then, for all j = 0,..., n-1, if s[a[j]] is the information that refers to the end point 161 (Step S611; Yes), the provision of scene data to all players for this play has ended, and the processing ends. If not (Step S611; No), the flow returns to Step S606.

In a case where the scene data s[a[k]] acquired in Step S609 indicate an option scene and information a[k] + 1 and subsequent information have accumulated in the order accumulation information, the next branch destination has been designated without reception of the selection input of k-th player.

In such a case, a regular scene with the information related to the option removed from the option scene may be generated and provided to the k-th terminal device 19 in Step S610.

Such conditions correspond to second and subsequent delays in a case where k-th player is continuously late two or more times with respect to the input period of selection input. This is because the first delay occurred after the option scene was provided. As described above, it is possible to replace the option scene with a regular scene so as to smoothly provide scene data to a late player without requesting the late player to unnecessarily enter a selection input.

In a case where a[k] + 1 and subsequent information are accumulated in the order accumulation information in Step S608, the numeric values of the command configured to specify the play speed and the command configured to control the speed at which messages such as textual information are presented to the players, which are included in scene data s[a[k]], may be changed so as to make the speed at which scene data are provided to late players faster than the speed at which the scene data are provided to players who are not late. In this case as well, the game proceeds smoothly for late players, allowing the players to catch up with the play state of the other players.

These scene (scene data) related replacements and numeric value changes may be delivered as parameters when scene data are provided, and the terminal device 19 may interpret the parameters and cancel option presentation or change the speed of presentation of the various multimedia information accordingly. Given that control parameters are included in the packet when such scene data are transmitted, tasks such as direct removal of the option information and extraction of speed control system commands of the providing unit 402 may be omitted.

The NIC 105 thus functions as the providing unit 402 in cooperation with the hard disk 103 and the RAM 104, under the control of the CPU 102.

### (Processing of receiving unit)

The receiving unit 403 monitors the response from the terminal device 19 and responds to the instructions from the designating unit 401. In this embodiment, the receiving unit 403 stores the option selected in response to the scene data provided last to the terminal device 19 as the option scene in the option area maintained on the hard disk 103 and the RAM 104, and performs the processing thereof.

In the following, the k-th terminal device 19 stores information indicating the number in order of the scene data (option scene) for which an option response was returned in the option area e[k], and information indicating the option in the option area d[k].

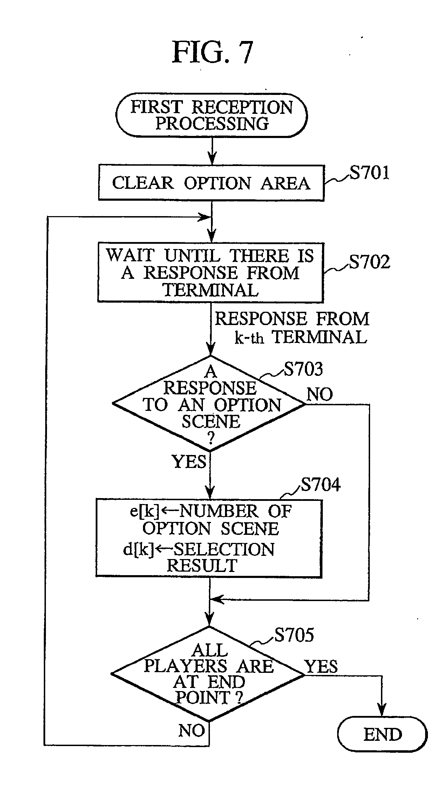

FIG. 7 is a flowchart illustrating the flow of control of first reception processing executed by the receiving unit 403 according to this embodiment. In the first reception processing, the response from the terminal device 19 is monitored. A description is given below with reference to this drawing.

First, the receiving unit 403 clears the option area, setting the area to a state in which no selection has been made by any of the players (Step S701). Specifically, the receiving unit 403 clears the elements e[j] and d[j] of the option area for j = 0,..., n-1.

The receiving unit 403 then waits until there is a response from one of the terminal devices 19 in synchronization with Step S605 (Step S702). Then, in a case where a response from k-th terminal device 19 is detected in Step S702, the receiving unit 403 makes a determination as to whether or not the response is associated with an option scene (Step S703). The determination can be made based on whether or not information of an option selected by the player has been specified in the response.

In a case where the response is for an option scene (Step S703; Yes), the receiving unit 403 sets information indicating the number in order from within the provided scene data to which the option scene specified in the response corresponds in e[k], and the option selected in response thereto in d[k] (Step S704), and the flow proceeds to Step S705. Otherwise (Step S703; No), the flow proceeds to Step S705.

Then, for all j = 0, ..., n-1, if s[a[j]] is the information that refers to the end point 161 (Step S705; Yes), the play has ended and the processing ends. If not (Step S705; No), the flow returns to Step S702.

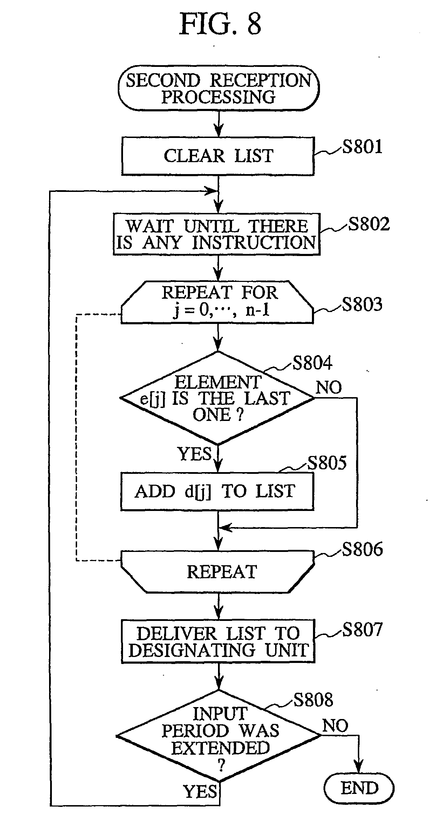

FIG. 8 is a flowchart illustrating the flow of control of second reception processing executed by the receiving unit 403 according to this embodiment. This processing is performed in response to instructions from the designating unit 401. The processing begins when the designating unit 401 issues instructions that instruct the receiving unit 403 to receive selection inputs from players (Step S508). A description is given below with reference to this drawing.

The receiving unit 403, in line with the instructions from the designating unit 401, creates a list of effective options received up to the present time from the start of the input period in the form of an array or queue, etc., and thus first clears the list (Step S801).

Then, the receiving unit 403 waits until there are instructions from the designating unit 401 requesting a list of selection inputs that could be received within the input period (Step S802). The instructions are issued in Step S510 in designation processing.

Then, the processing up to Step S806 is repeated for j = 0, ... , n-1, respectively (Step S803).

While the processing is being repeated, the receiving unit 403 checks whether or not element e[j] of the order accumulation area is the last element (Step S804). If it is the last element (Step S804; Yes), the selection result of j-th user for option scene s[e[j]] is d[j], and therefore the receiving unit 403 adds the selection result d[j] to the list (Step S805) and continues the repetition processing (Step S806). If it is not the last (Step S804; No), the designating unit 401 has already designated the next scene data of the option scene s[e[j]], and therefore the receiving unit 403 continues the repetition processing as is (Step S806).

Once the repetition (Step S806) ends, the receiving unit 403 returns the list to the designating unit 401 (Step S807). The designating unit 401 checks the length of the list so as to acquire the number of players from whom the receiving unit 403 received selection inputs within the input period.

Next, the designating unit checks whether or not the input period has been extended (Step S808). If the input period has been extended (Step S808; Yes), the flow returns to Step S802. On the other hand, if the input period has not been extended (Step S808; No), the processing ends.

In this manner, the NIC 105 thus functions as the receiving unit 403 in cooperation with the hard disk 103 and the RAM 104 under the control of the CPU 102.

Thus, according to this embodiment, even in a case where some of the players participating in the flow of the same story are involved in an incident such as a network communication delay or communication disconnection or pausing and stepping away from the game, the remaining players can proceed with the story without waiting until recovery.

Further, the scene data are provided to those players involved in an incident based on a designated order after the recovery, making it possible to provide those players with the same story as the remaining players who had proceeded ahead.

Then, when there is provided a game in which scene data change according to the selection inputs of a plurality of players and there is delay in or no selection input from some of the players, the scene data are provided to the other players without delay and provided to the delayed players in the same order as the other players, thereby enabling the players to play the game as a single party.

Furthermore, while the foregoing embodiment has been mainly described in connection with a form similar to a text type adventure game, the form corresponding to selection input may be one wherein the player selects an option from a set of options presented by the game server 13 or one wherein the numeric value or string directly entered by the player is used as a selection input that expresses the value selected by the player.

Further, the unit of the scene data is not necessarily limited to a scene-based unit such as described above, but may be smaller. For example, in a game where there are a great number of characters operated by players, such as MMORPG, the processing unit of the operation may conceivably be scene data.

In such a case, the designating unit 401 presents the players with "new data representing the virtual world" as the next scene data to be presented. Then, the order accumulation area accumulates the history of the updates of the data representing the virtual world.

### Embodiment 2

While the above embodiment adopts a scenario wherein a predetermined time period is added to the current time to establish the end time of the input period, the following are also conceivable setting methods for the end time of the input period:
(a) The time after elapse of a predetermined time period from the time at which the number of players who have already received the option scene is greater than or equal to a predetermined threshold value;
(b) The time after elapse of a time period specified in the scene information of the option scene, from the time at which the number of players who have already received the option scene is greater than or equal to a predetermined threshold value; or
(c) The time after elapse of a time period specified in the scene information of the option scene from the current time.

The predetermined threshold value may be a common value for all options scenes, and may be suitably selected from one of the following:
(a) The total number of players who have received scene data in the same order;
(b) The value 0; in this case, if there is no selection input from any of the players, a random number, etc., is used to designate the next branch destination scene; or
(c) The threshold value specified in the scene information of the option scene.

Furthermore, the flowchart corresponding to the script 141 is typically prepared in advance in its entirety for text type adventure games, but may be automatically generated according to how the game advances.
For example, in the case of MMORPG, etc., the framework of the story is determined, but circumstances such as use of offensive or defensive measures, etc. in a battle, or the selection of a road from a current position when moving within the virtual world, may be adopted as an element corresponding to an option scene. In a case where scene data are dynamically generated in this manner, the order of the scene data provided to each player is uniquely determined, so the same story can be provided to all players even if there are slight differences in the level of progress within the game of each player, as long as the order in which the scene data provided from the start of the game to the most recent state are accumulated in some form.

In a case where a battle scene is established as an option scene, an automatic play may be made for a player who is significantly late with respect to the input period by statistically processing the past offensive and defensive habits of the player, etc.

In such a case, the game may be designed so that the battle result will be the same even if the player returns to the game and enters some type of instruction, regardless of the instruction, or the player may be presented with information at the time of the battle indicating that the battle was automatically performed and the player will not be able to enter battle related instructions. A method of not providing the battle scene itself and just showing the battle result is also possible.

Note that the present application claims priority based on Japanese Patent Application Number 2006-040308, the contents of which are incorporated herein by reference to the fullest extent permitted by the law of the designated country.
Industrial Applicability

As described above, according to the present invention, it is possible to provide a game server device and a game service method that provide scene data without delay when providing a game in which scene data change according to selection inputs by a plurality of players, even if there is a delay in or no selection input by some of the players, a computer readable information recording medium storing a program for realizing these on a computer, and the program.

## Claims

1. A game server device (13) comprising:
a designating unit (401) configured to designate an order in which scene data are to be provided to a plurality of players;
a providing unit (402) configured to provide scene data in said designated order to each of a plurality of players; and
a receiving unit (403) configured to receive a selection input from each of the plurality of players based on instructions from said designating unit (401); wherein:
said designating unit (401), in a case where second scene data following first scene data are to be designated in the order based on selection inputs from the plurality of players, sets an input period that precedes the designation, causes said receiving unit (403) to receive selection inputs from the plurality of players, and designates the second scene data based on the selection inputs received within the input period.

2. A game server device (13) comprising:
a designating unit (401) configured to designate an order in which scene data are to be provided to a plurality of players;
a providing unit (402) configured to provide scene data in said designated order to each of a plurality of players; and
a receiving unit (403) configured to receive a selection input from each of the plurality of players based on instructions from said designating unit (401); wherein:
said designating unit (401), in a case where second scene data following first scene data are to be designated in the order based on selection inputs from part of or whole the plurality of players, sets an input period that precedes said designation, causes said receiving unit (403) to receive selection inputs from said plurality of players, designates the second scene data based on the selection inputs received within said input period, and:
(a) provides to a player who entered a selection input during the input period said designated second scene data following the first scene data based on the selection inputs received during the input period; and
(b) provides to a player who did not enter a selection input during the input period said designated second scene following the first scene data based on the selection inputs received during the input period, after a selection input from the player who did not enter a selection input during the input period is received after the input period lapses.

3. The game server device (13) according to claim 2, wherein:
said receiving unit (403) cancels reception of selection inputs from those players among the plurality of players for which the input period lapsed before said providing unit (402) provided the first scene data.

4. The game server device (13) according to claim 2, wherein:
said designating unit (401) is configured so that in a case where the number of selection inputs received within the input period is less than a predetermined quorum, the end time of the input period is extended to a time that reflects the elapse of a predetermined time period from the current time, enabling said receiving unit (403) to further receive selection inputs within the extended input period.

5. The game server device (13) according to claim 2, wherein:
said providing unit (402) provides the scene data to the plurality of players by transmitting the scene data to terminal devices respectively operated by each of the plurality of players;
the scene data include commands that specify the speed at which the transmitted scene data are to be played in the terminal device, or the speed at which a message included in the transmitted scene data is to be presented to the player; and
said providing unit (402) specifies, in the command included in scene data provided in the second and subsequent scene data to players who did not enter a selection input within the input period, a speed faster than the speed specified in the command included in scene data provided in the second and subsequent scene data to players who entered a selection input within the input period, and transmits the scene data.

6. A game service method comprising:
a designating step of designating an order in which scene data are to be provided to a plurality of players;
a providing step of providing scene data in said designated order to each of a plurality of players; and
a receiving step of receiving a selection input from each of the plurality of players in order to designate an order in which scene data are to be provided in said designating step; wherein:
in said designating step, in a case where second scene data following first scene data are to be designated in the order based on selection inputs from the plurality of players, an input period that precedes the designation is set, selection inputs from the plurality of players are caused to be received in said receiving step, and the second scene data are designated based on the selection input received within the input period.

7. A computer-readable information recording medium storing a program for controlling a computer to function as:
a designating unit (401) configured to designate an order in which scene data are to be provided to a plurality of players;
a providing unit (402) configured to provide scene data in said designated order to each of a plurality of players; and
a receiving unit (403) configured to receive a selection input from each of the plurality of players based on instructions from said designating unit (401); wherein:
said designating unit (401), in a case where second scene data following first scene data are to be designated in the order based on selection inputs from the plurality of players, sets an input period that precedes the designation, causes said receiving unit (403) to receive selection inputs from the plurality of players, and designates the second scene data based on the selection inputs received within the input period.

8. A program for controlling a computer to function as:
a designating unit (401) configured to designate an order in which scene data are to be provided to a plurality of players;
a providing unit (402) configured to provide scene data in said designated order to each of a plurality of players; and
a receiving unit (403) configured to receive a selection input from each of the plurality of players based on instructions from said designating unit (401); wherein:
said designating unit (401), in a case where second scene data following first scene data are to be designated in the order based on selection inputs from the plurality of players, sets an input period that precedes the designation, causes said receiving unit (403) to receive selection inputs from the plurality of players, and designates the second scene data based on the selection inputs received within the input period.
